# EUROPÄISCHE PATENTSCHRIFT

(11) **EP 3 827 188 B1**
(45) Veröffentlichungstag und Bekanntmachung des Hinweises auf die Patenterteilung: **18.03.2026**
(21) Anmeldenummer: 19805643.4
(22) Anmeldetag: 18.11.2019
(51) Int. Cl.: F16K 7/14, F16K 7/17, F16K 27/02, F16K 31/04, F16K 31/122, F16K 1/48

(54) **VENTILANTRIEB**
VALVE ACTUATOR
COMMANDE DE SOUPAPE

(30) Priorität: 11.12.2018 DE 202018107064 U
(43) Veröffentlichungstag der Anmeldung: 02.06.2021
(73) Patentinhaber: GEMÜ Gebr. Müller Apparatebau GmbH & Co. Kommanditgesellschaft, 74635 Kupferzell (DE)
(72) Erfinder: MATTER, Simon, 74747 Ravenstein (DE); BAUMGAERTNER, Michael, 74677 Doerzbach (DE); FRANKENBACH, Klaus, 74670 Forchtenberg (DE)
(74) Vertreter: DREISS Patentanwälte PartG mbB
(86) Internationale Anmeldenummer: PCT/EP2019/081568
(87) Internationale Veröffentlichungsnummer: WO 2020/120070

(56) Entgegenhaltungen:
- EP-A1- 2 998 625
- EP-A1- 3 287 679
- EP-A1- 3 333 465
- EP-B1- 2 998 625
- EP-B1- 3 287 679
- WO-A2-97/44645
- DE-A1- 2 305 668
- DE-B4- 102016 124 805
- DE-C- 361 911
- DE-C- 522 229
- DE-U1- 202013 102 526
- JP-A- H0 193 674
- US-A- 1 288 674
- US-A- 2 108 234
- US-A- 5 711 507
- US-A1- 2015 247 581
- US-A1- 2015 354 718
- US-A1- 2017 328 489
- US-B2- 9 341 270

## Beschreibung

Die Erfindung betrifft Ventilantriebe für Ventile zur Begrenzung eines Flusses eines Prozessfluids.

US2017328489, WO9744645, US9341270, EP2998625, US2108234 und EP3287679 betreffen unterschiedliche Ausprägungen von Ventilen. Aus der US 2015/0354718 A1 ist ein Membranventil mit einer formschlüssig mit einer Membran verbundenen Antriebspindel bekannt.

Die Probleme des Standes der Technik werden durch einen Ventilantrieb gemäß dem Anspruch 1 gelöst. Vorteilhafte Weiterbildungen finden sich in den Unteransprüchen und ferner in der nachfolgenden Beschreibung von Beispielen. Gemäß einem ersten Aspekt dieser Beschreibung wird ein Ventilantrieb für ein Ventil bereitgestellt. Das Ventil umfasst: Einen entlang einer Zustellachse verschieblichen und in einem Gehäuse anordenbaren ersten Abschnitt einer Antriebsstange mit einer ersten Kopplungskontur, eine elektromotorische Antriebseinheit mit einem axial beweglichen zweiten Abschnitt der Antriebsstange, wobei der zweite Abschnitt der Antriebsstange eine zweite Kopplungskontur umfasst, wobei die erste und die zweite Kopplungskontur in einem Betriebszustand des Ventilantriebs, in welchem das Gehäuse und die Antriebseinheit zueinander festgelegt sind, entlang der Zustellachse formschlüssig ineinandergreifen, und wobei die zweite Kopplungskontur in einem Montagezustand des Ventilantriebs, in welchem das Gehäuse und die Antriebseinheit nicht zueinander festgelegt sind, von der ersten Kopplungskontur entfernbar und mit der ersten Kopplungskontur koppelbar ist.

Vorteilhaft wird durch die Entfernbarkeit und Koppelbarkeit der zweiten Kopplungskontur gegenüber der ersten Kopplungskontur eine verschleißreduzierte Möglichkeit zur Montage und Demontage des Ventilantriebs geschaffen. Durch die verschleißarme Kopplung der beiden Abschnitte der Antriebsstange können hohe Schaltwechselzahlen erreicht werden. Zum anderen wird sichergestellt, dass in dem Betriebszustand des Ventilantriebs die von der elektromotorischen Antriebseinheit erzeugte Kraft präzise in die Antriebsstange eingebracht und in Richtung des Absperrmittels im Ventilkörper weitergeleitet wird. Darüber hinaus ermöglicht die einfache Konstruktion einen vereinfachten Austausch und dadurch reduzierte Rüstzeiten, was Stillstandzeiten der jeweiligen Anlage reduziert.

Ferner zeichnet sich die Erfindung dadurch aus, dass die zweite Kopplungskontur in dem Montagezustand des Ventilantriebs in einer gedachten Lotebene der Zustellachse zu der ersten Kopplungskontur verschieblich ist, sodass die zweite Kopplungskontur durch eine Seitwärtsbewegung der Antriebseinheit von der ersten Kopplungskontur trennbar ist. Vorteilhaft wird durch die Verschieblichkeit in der gedachten Lotebene erreicht, dass Anlageflächen in einer zugehörigen weiteren Lotebene der Zustellachse liegen. Hierdurch werden unsymmetrische Spannungen bei der Kraftübertragung über die zwei Kopplungskonturen reduziert und eine gleichmäßige Kraftübertragung gewährleistet. Eine nahezu spielfreie Verbindung wird hierdurch ermöglicht.

Ein vorteilhaftes Beispiel zeichnet sich dadurch aus, dass die erste Kopplungskontur und die zweite Kopplungskontur entlang der Zustellachse nahezu spielfrei miteinander verbunden sind. Durch die nahezu spielfreie Verbindung des ersten und zweiten Abschnitts der Antriebsstange kann die Membran präzise und schnell mittels der Antriebseinheit bewegt werden. Vorteilhaft lässt sich damit die Zykluszeit reduzieren und gleichzeitig eine präzise Bewegung der Membran erreichen.

Ein vorteilhaftes Beispiel zeichnet sich dadurch aus, dass der Ventilantrieb umfasst: Einen ersten Gehäuseanschlussbereich des Gehäuses, in welchem der Abschnitt der Antriebsstange axial entlang der Zustellachse verschieblich festgelegt ist, einen zweiten Gehäuseanschlussbereich der Antriebseinheit, wobei der erste Gehäuseanschlussbereich mit dem zweiten Gehäuseanschlussbereich derart korrespondiert, sodass in der Betriebsposition der erste und der zweite Abschnitt der Antriebsstange auf der gemeinsamen Zustellachse liegen. Vorteilhaft sorgen der erste und der zweite Gehäuseanschlussbereich für die koaxiale Ausrichtung der Abschnitte der Antriebsstange auf der gemeinsamen Zustellachse.

Ein vorteilhaftes Beispiel zeichnet sich dadurch aus, dass zwischen einem Elektromotor der Antriebseinheit und der zweiten Kopplungskontur des zweiten Abschnitts ein nicht selbsthemmendes Getriebe angeordnet ist. Vorteilhaft kann die Antriebseinheit auf einfache Art und Weise mit dem zweiten Abschnitt der Antriebsstange verbunden werden, da der erste Abschnitt der Antriebsstange aufgrund des nicht selbsthemmenden Getriebes manuell so weit herausziehbar ist, dass dieser mit dem ersten Abschnitt koppelbar ist.

Ein vorteilhaftes Beispiel zeichnet sich dadurch aus, dass die Vorspannbaugruppe einen Gegenlagerabschnitt und einen Klemmabschnitt zur Verklemmung der Membran umfasst, wobei sich der Klemmabschnitt mittels des unter Druck stehenden Federelements an dem Gegenlagerabschnitt abstützt, wobei der Klemmabschnitt in einem durch eine Durchgangsöffnung des Gegenlagerabschnitts hindurchragenden Abschnitt einen ersten Anschlagbereich umfasst, und wobei in dem vorgespannten Zustand der Vorspannbaugruppe ein zweiter Anschlagbereich des Gegenlagerabschnitts in Zusammenwirken mit dem ersten Anschlagbereich des Klemmabschnitts eine Bewegung des Klemmabschnitts weg von dem Gegenlagerabschnitt begrenzt.

Vorteilhaft wird eine modulare Ausführung der Vorspannbaugruppe bereitgestellt, welche im Falle eines Defekts oder im Falle von Wartungsarbeiten auf einfache Art und Weise austauschbar ist. Insbesondere sind die Einzelteile der Vorspannbaugruppe über die beiden Anschlagbereiche verliersicher zueinander angeordnet.

Ein nicht erfindungsgemäßer zweiter Aspekt dieser Beschreibung betrifft einen Ventilantrieb für ein Ventil, welches einen Strom eines Prozessfluids begrenzt, wobei der Ventilantrieb umfasst: Eine entlang einer Zustellachse bewegliche Antriebsstange, welche zur Bewegung einer Membran ausgebildet ist, einen starr mit der Antriebsstange verbundenen Pneumatikkolben, ein Gehäuse, welches einen Bewegungsraum für den Pneumatikkolben freigibt, wobei der Pneumatikkolben den Bewegungsraum in eine proximale und eine distale Kammer trennt, wobei ein Steuerluftkanal des Gehäuses eine der beiden Kammern und einen Steuerluftanschluss luftführend miteinander verbindet, und wobei der Steuerluftanschluss sich an eine das Gehäuse distal begrenzende Oberfläche anschließt.

Vorteilhaft wird durch diese Anordnung des Steuerluftanschlusses ein lateraler Bauraum freigegeben. Folglich kann die Ventildichte einer Anlage erhöht werden. Vielmehr wird durch den vorgeschlagenen Ventilantrieb der freie Raum in der Höhe genutzt, um Steuerluftleitungen zum Ventilantrieb zu führen und dort anzuschließen. Des Weiteren kann der Ventilantrieb beispielsweise auf den zugeordneten Ventilkörper aufgeschraubt werden, wobei sich die Position des Steuerluftanschlusses bei der Drehung des Ventilantriebs im Vergleich mit einer lateralen Anordnung eines Steuerluftanschlusses nur geringfügig ändert.

Ein vorteilhaftes Beispiel zeichnet sich dadurch aus, dass der Steuerluftanschluss beabstandet zu der Zustellachse angeordnet ist. Durch diese dezentrale Anordnung wird ein Bereich um die Zustellachse freigelassen, der für weitere Einrichtungen wie beispielsweise eine Hubbegrenzung verwendet werden kann.

Für funktionsäquivalente Merkmale werden auch bei unterschiedlichen Beispielen die gleichen Bezugszeichen verwendet. In der Zeichnung zeigen:
Figur 1 einen Ventilantrieb in schematischer Form;
Figur 2 einen schematischen perspektivischen Ausschnitt des Ventilantriebs aus Figur 1; und
Figuren 3 und 4
   jeweils einen Ventilantrieb in einem schematischen Schnitt.

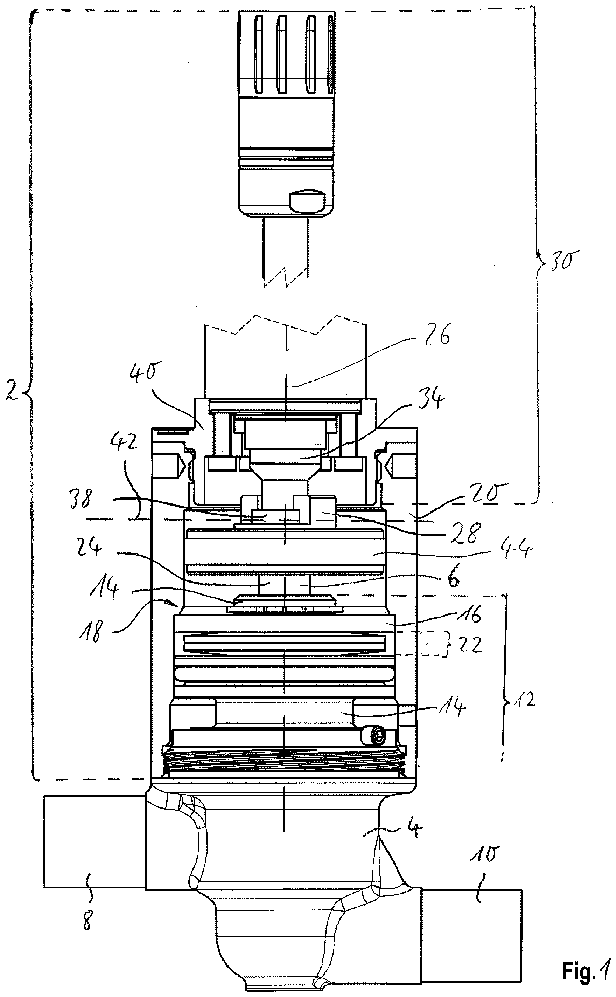

Figur 1 zeigt einen Ventilantrieb 2 in schematischer Form, welcher auf einen Ventilkörper 4 aufgeschraubt ist. Ein nicht gezeigtes Absperrungsorgan ist an einer Antriebsstange 6 angeordnet und begrenzt den Strom eines zwischen Anschlüssen 8 und 10 des Ventilkörpers 4 fließenden Prozessfluids. Eine Vorspannbaugruppe 12 umfasst einen Klemmabschnitt 14, welcher durch eine Öffnung eines Gegenlagerabschnitts 16 hindurchtritt und dort einen ersten Anschlagbereich für den Gegenlagerabschnitt 16 bereitstellt. Der Gegenlagerabschnitt 16 stützt sich im verbauten Zustand der Vorspannbaugruppe 12 an einem Durchmesserrücksprung 18 des Gehäuses 20 ab. Ein Federelement 22 beispielsweise in Form eines Tellerfederpakets stützt sich an dem Gegenlagerabschnitt 16 ab und drückt den Klemmabschnitt 14 mit einem proximalen nicht gezeigten Klemmbereich auf einen Klemmabschnitt des nicht gezeigten Absperrungsorgans insbesondere einer Membran.

Ein erster Abschnitt 24 der Antriebsstange 6 ist entlang einer Zustellachse 26 verschieblich in dem Gehäuse 20 angeordnet. Eine elektromotorische Antriebseinheit 30 umfasst einen nicht gezeigten Elektromotor, welcher einen axial beweglichen zweiten Abschnitt 34 der Antriebsstange 6 antreibt. Das Gehäuse 20 umfasst einen Anschlussbereich, welcher zu einem Anschlussbereich der Antriebseinheit 30 korrespondiert. Beispielsweise umfasst das Gehäuse 20 ein Innengewinde, in welches ein Außengewinde der Antriebseinheit 30 eindrehbar ist. Die Anschlussbereiche zur Verbindung des Gehäuses 20 mit der Antriebseinheit 30 sind im Wesentlichen rotationssymmetrisch zur Zustellachse 26, sodass in einem Betriebszustand des Ventilantriebs 2 die beiden Abschnitte 24 und 34 koaxial zueinander angeordnet sind und auf der Zustellachse 26 liegen.

Der erste Abschnitt 24 umfasst eine distale erste Kopplungskontur 28, welche mit einer distalen zweiten Kopplungskontur 38 des zweiten Abschnitts 34 derart korrespondiert, dass eine formschlüssige Verbindung der beiden Abschnitte 24 und 34 der Antriebsstange 6 in dem Betriebszustand des Ventilantriebs 2 vorliegt. Die beiden Abschnitte 24 und 34 sind entlang der Zustellachse 26 nahezu spielfrei miteinander verbunden.

In einem Montagezustand des Ventilantriebs 2 wird die Antriebseinheit 30 aus dem Gehäuse 20 herausgedreht und damit von dem Gehäuse 20 entfernt. Ist das distale Ende eines Anschlussabschnitts 40 der Antriebseinheit 30 aus einer distalen Öffnung des Gehäuses 20 herausgeführt, so kann die zweite Kopplungskontur 38 in einer gedachten Lotebene 42 der Zustellachse 26 verschoben und somit von der Kopplungskontur 28 entfernt werden. Somit werden durch eine Seitwärtsbewegung der Antriebseinheit 30 die beiden Abschnitte 24 und 34 der Antriebsstange 6 voneinander getrennt, womit die einzelnen Baugruppen wie beispielsweise die Vorspannbaugruppe 12, die Antriebseinheit 30 und/oder das Gehäuse 20 getauscht werden können.

Mit dem ersten Abschnitt 24 starr verbunden ist ein Führungskolben 44, welcher innerhalb eines Führungsraumes, der durch das Gehäuse 20 freigegeben wird, entlang der Zustellachse 26 beweglich gelagert ist.

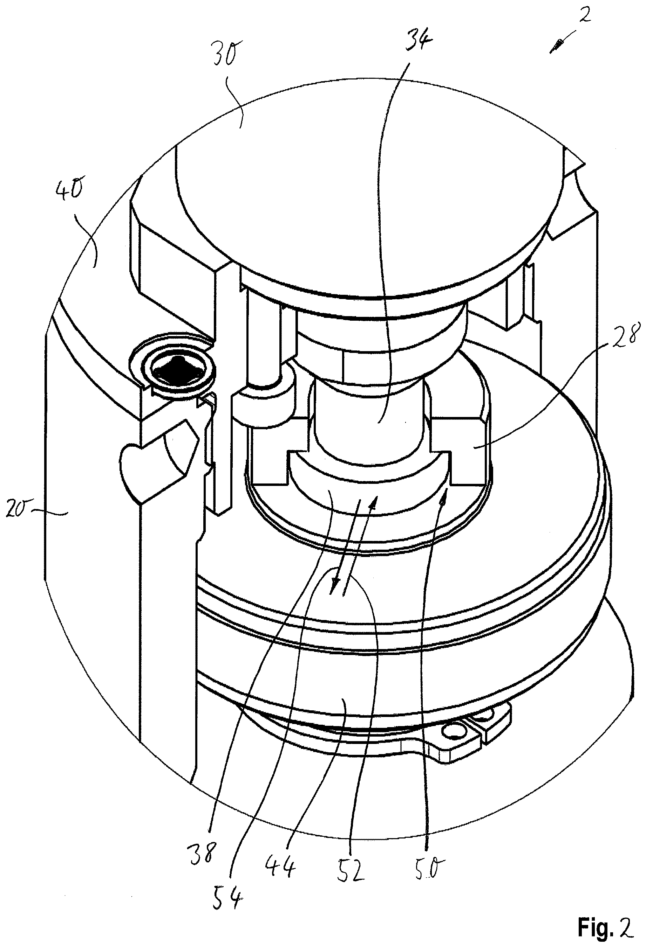

Figur 2 zeigt eine schematische perspektivische Darstellung eines Ausschnitts der Antriebseinheit 2. Die erste Kopplungskontur 28 stellt einen Hinterschnitt bereit, in welchen die flachzylindrische zweite Kopplungskontur 38 eingreift. Der Hinterschnitt der ersten Kopplungskontur 28 umfasst eine laterale Öffnung 50. In eine Montagerichtung 52 wird die Kopplungskontur 38 in die Kopplungskontur 28 eingebracht. In eine Demontagerichtung 54 wird die Kopplungskontur 38 aus der Kopplungskontur 28 entfernt. Die Kopplungskonturen 28 und 38 sind lediglich beispielhaft dargestellt und können selbstverständlich auch anders ausgeführt sein, beispielsweise vertauscht zueinander sein.

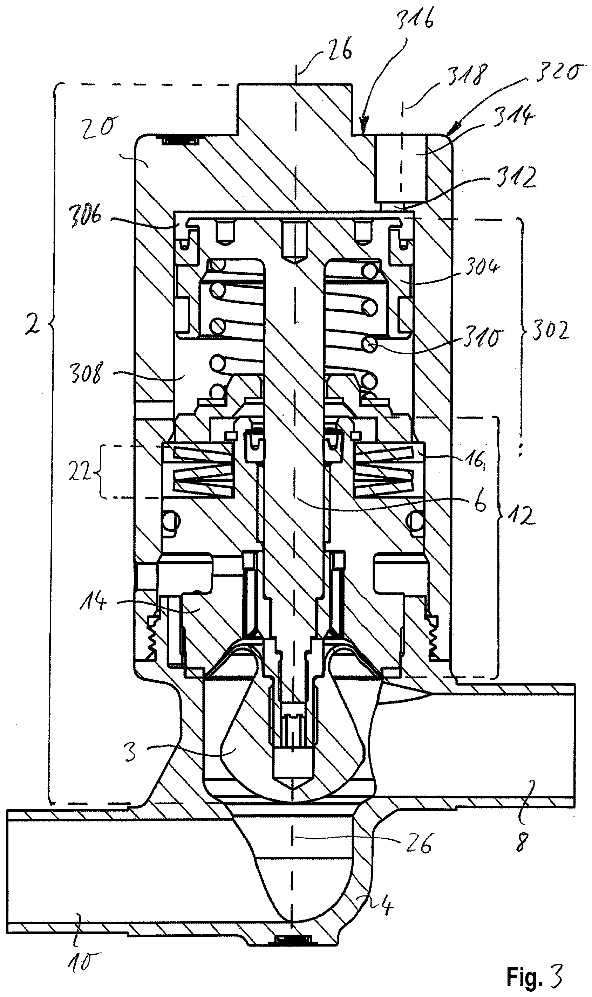

Figur 3 zeigt eine schematische Schnittansicht eines Ventils mit einem Ventilantrieb 2 und einem Ventilkörper 4, wobei der Ventilantrieb 2 auf den Ventilkörper 4 aufgeschraubt ist. Die dargestellte Membran 3 ist eine sogenannte PD-Membran (PD: Plug Diaphragm), wie sie auch bei dem in Figur 1 und 2 gezeigten Ventil zum Einsatz kommt. Neben der bereits zu Figur 1 beschriebenen Vorspannbaugruppe 12 umfasst der gezeigte Ventilantrieb 2 eine Antriebsbaugruppe 302 mit einem starr mit der Antriebsstange 6 verbundenen Pneumatikkolben 304, welcher sich in einem Bewegungsraum entlang der Zustellachse 26 bewegt. Der Pneumatikkolben 304 teilt den Bewegungsraum in eine distale Kammer 306 und eine proximale Kammer 308. Ein Federelement 310 drückt den Pneumatikkolben 304 in distale Richtung von dem Ventilkörper 4 weg, sodass das Ventil sich in einem normal geöffneten Zustand befindet. Wird über einen Steuerluftkanal 312 der Druck in der distalen Kammer 306 erhöht, so bewegt sich die Antriebsstange 6 und damit die Membran 3 in Richtung des Ventilsitzes.

Der Steuerluftkanal 312 verbindet die distale Kammer 306 und einen Steuerluftanschluss 314, welcher sich an eine das Gehäuse 20 distal begrenzende Oberfläche 316 anschließt. Selbstverständlich kann der Steuerluftanschluss 314 auch über die distale Fläche 316 hinausragen. Darüber hinaus kann die distale Fläche 316 auch schräg gestellt sein. Selbstverständlich kann auch eine Längsachse 318 des Steuerluftanschlusses 314 nicht wie gezeigt parallel zur Zustellachse 26 verlaufen, sondern auch zur Zustellachse 26 schräg gestellt sein. Darüber hinaus kann die Druckluft auch über einen Winkeldruckluftanschluss umgelenkt werden. Der Steuerluftanschluss 314 ist radial beabstandet zu der Zustellachse 26 und befindet sich damit zwischen einem distalen Randbereich 320 der distalen Fläche 316 und der im Bereich der Zustellachse 26 befindlichen Mitte des Oberteils des Gehäuses 20. Die außermittige Anordnung des Steuerluftanschlusses schafft Platz für die Integration weiterer Funktionen wie beispielsweise einer Hubbegrenzung.

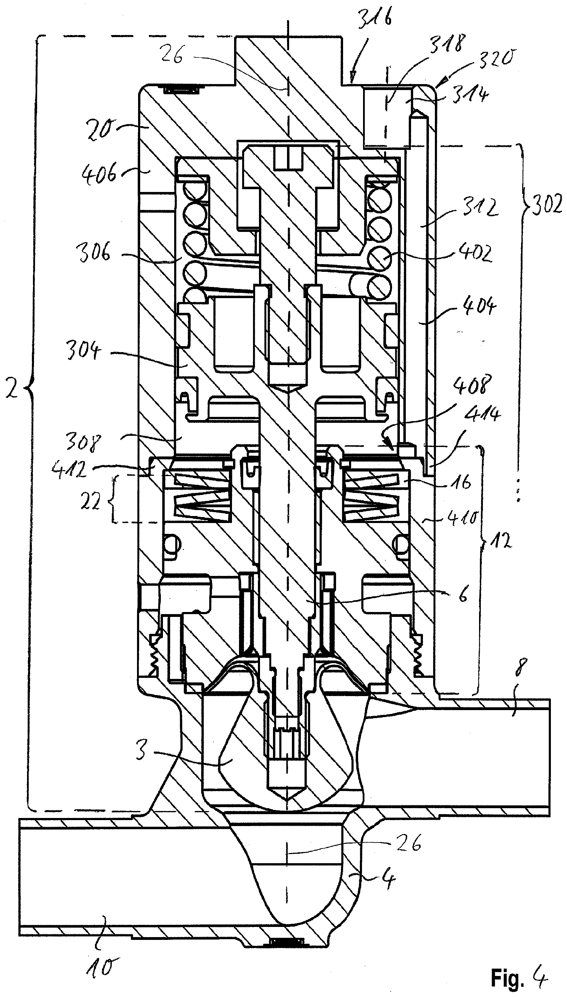

Figur 4 zeigt eine schematische Schnittansicht eines Ventils mit dem Ventilantrieb 2 und einem Ventilkörper 4 in einem Beispiel. Im Unterschied zu Figur 3 führt der Steuerluftkanal 312 ausgehend von dem Steuerluftanschluss 314 in die proximale Kammer 308. Eine Feder 402 drückt den Pneumatikkolben 304 und damit die Antriebsstange 6 in Richtung des Ventilsitzes, womit sich ein normal geschlossener Zustand des Ventils ergibt. Der Steuerluftkanal 312 umfasst eine von proximaler Seite eines Gehäuseabschnitts 406 des Gehäuses 20 ausgeführte Bohrung 404, welche in distaler Richtung mit dem Steuerluftanschluss 314 luftführend verbunden ist. Des Weiteren ist die Bohrung 404 über einen nach innen laufende Öffnung 408 mit der proximalen Kammer 308 verbunden. Ein proximaler Gehäuseabschnitt 410 umfasst einen distalen Anschlussbereich 412, welcher mit einem Anschlussbereich 414 des distalen Gehäuseabschnitts 406 korrespondiert. Ausgehend von dem Anschlussbereich 414 ist die Bohrung 404 als Sacklochbohrung ausgeführt.

## Patentansprüche

1. Ein Ventilantrieb (2) für ein Ventil, welches einen Strom eines Prozessfluids begrenzt, wobei der Ventilantrieb (2) umfasst:
einen entlang einer Zustellachse (26) verschieblichen und in einem Gehäuse (20) anordenbaren ersten Abschnitt (24) einer Antriebsstange (6) mit einer ersten Kopplungskontur (28),
eine elektromotorische Antriebseinheit (30) mit einem axial beweglichen zweiten Abschnitt (34) der Antriebsstange (6), wobei der zweite Abschnitt (34) der Antriebsstange (6) eine zweite Kopplungskontur (38) umfasst,
wobei die erste und die zweite Kopplungskontur (28, 38) in einem Betriebszustand des Ventilantriebs (2), in welchem das Gehäuse (20) und die Antriebseinheit (30) zueinander festgelegt sind, entlang der Zustellachse (26) formschlüssig ineinandergreifen,
**dadurch gekennzeichnet, dass**
die zweite Kopplungskontur (38) in einem Montagezustand des Ventilantriebs (2), in welchem das Gehäuse (20) und die Antriebseinheit (30) nicht zueinander festgelegt sind, von der ersten Kopplungskontur (28) entfernbar und mit der ersten Kopplungskontur (28) koppelbar ist, und dass
die zweite Kopplungskontur (38) in dem Montagezustand des Ventilantriebs (2) in einer gedachten Lotebene (42) der Zustellachse (26) zu der ersten Kopplungskontur (28) verschieblich ist, sodass die zweite Kopplungskontur (38) durch eine Seitwärtsbewegung der Antriebseinheit (30) von der ersten Kopplungskontur (28) trennbar ist.

2. Der Ventilantrieb (2) gemäß dem Anspruch 1,
wobei die erste Kopplungskontur (28) und die zweite Kopplungskontur (38) entlang der Zustellachse (26) nahezu spielfrei miteinander verbunden sind.

3. Der Ventilantrieb (2) gemäß einem der vorigen Ansprüche, wobei der Ventilantrieb (2) umfasst:
einen ersten Gehäuseanschlussbereich des Gehäuses (20), in welchem der erste Abschnitt (24) der Antriebsstange (6) axial entlang der Zustellachse (26) verschieblich festgelegt ist,
einen zweiten Gehäuseanschlussbereich der Antriebseinheit (30),
wobei der erste Gehäuseanschlussbereich mit dem zweiten Gehäuseanschlussbereich derart korrespondiert, sodass in der Betriebsposition der erste und der zweite Abschnitt (24, 34) der Antriebsstange (6) auf der gemeinsamen Zustellachse liegen.

4. Der Ventilantrieb (2) gemäß dem Anspruch 3, wobei der zweite Anschlussbereich ein Gewinde bereitstellt, in welches ein korrespondierendes Gegengewinde des ersten Anschlussbereichs eindrehbar ist.

5. Der Ventilantrieb (2) gemäß einem der vorigen Ansprüche, wobei zwischen einem Elektromotor der Antriebseinheit (30) und der zweiten Kopplungskontur (38) des zweiten Abschnitts (34) ein nicht selbsthemmendes Getriebe angeordnet ist.

6. Der Ventilantrieb (2) gemäß einem der Ansprüche 1 bis 4, wobei zwischen einem Elektromotor der Antriebseinheit (30) und der zweiten Kopplungskontur (38) des zweiten Abschnitts (34) ein selbsthemmendes Getriebe angeordnet ist.

7. Der Ventilantrieb (2) gemäß dem Anspruch 6,
wobei der zweite Abschnitt (34) der Antriebsstange (6) mittels des Elektromotors ausfahrbar ist,
wobei die zweite Koppelkontur (38) des ausgefahrenen zweiten Abschnitts (34) mit der ersten Koppelkontur (28) koppelbar ist,
wobei der zweite mit dem ersten Abschnitt (32) gekoppelte Abschnitt (34) mittels des Elektromotors einfahrbar ist, und
wobei die Antriebseinheit (30) mit den gekoppelten ersten und zweiten Abschnitten (24, 34) zu dem Gehäuse festlegbar ist.

8. Der Ventilantrieb (2) gemäß einem der vorstehenden Ansprüche, wobei der erste Abschnitt (24) der Antriebsstange (6) fest mit einem Führungskolben (44) verbunden ist, und wobei der Führungskolben (44) innerhalb eines Führungsraumes, welchen das Gehäuse (20) freigibt, entlang der Zustellachse (26) beweglich gelagert ist,
und/oder
wobei in dem Gehäuse (20) eine Vorspannbaugruppe (12) zur Anordnung zwischen der Antriebseinheit (30) und einer Membran (3) angeordnet ist.

9. Der Ventilantrieb (2) gemäß dem Anspruch 8, wobei der Führungskolben (44) zwischen der Antriebseinheit (30) und der Vorspannbaugruppe (12) angeordnet ist.

10. Der Ventilantrieb (2) gemäß Anspruch 8 oder 9, wobei ein Federelement (22) der Vorspannbaugruppe (12) die Vorspannbaugruppe (12) vor Einbringung in das Gehäuse (20) in einem vorgespannten Zustand hält.

11. Der Ventilantrieb (2) gemäß dem Anspruch 10, wobei das Federelement (22) nach Einbringung der Vorspannbaugruppe (12) in das Gehäuse dazu ausgebildet ist, eine Membran (3) zwischen der Vorspannbaugruppe (12) und einem Ventilkörper (4) zu verklemmen.

12. Der Ventilantrieb (2) gemäß einem der vorstehenden Ansprüche, wobei das Gehäuse (20) einen von der Antriebseinheit (30) abgewandt angeordnetes Gewinde aufweist, welches in ein Gegengewinde des zugeordneten Ventilkörpers (4) eindrehbar ist,
und/oder
wobei die Vorspannbaugruppe (12) sich an einem Durchmesserrücksprung des Gehäuses (20) abstützt.

13. Der Ventilantrieb (2) gemäß einem der Ansprüche 8 bis 12,
wobei die Vorspannbaugruppe (12) einen Gegenlagerabschnitt und einen Klemmabschnitt zur Verklemmung der Membran (3) umfasst,
wobei sich der Klemmabschnitt mittels des unter Druck stehenden Federelements (22) an dem Gegenlagerabschnitt abstützt,
wobei der Klemmabschnitt in einem durch eine Durchgangsöffnung des Gegenlagerabschnitts hindurchragenden Abschnitt einen ersten Anschlagbereich umfasst, und
wobei in dem vorgespannten Zustand der Vorspannbaugruppe (12) ein zweiter Anschlagbereich des Gegenlagerabschnitts in Zusammenwirken mit dem ersten Anschlagbereich des Klemmabschnitts eine Bewegung des Klemmabschnitts weg von dem Gegenlagerabschnitt begrenzt.

14. Der Ventilantrieb (2) gemäß einem der Ansprüche 8 bis 13, wobei der erste Abschnitt (24) der Antriebsstange (6) innerhalb der Vorspannbaugruppe (12) entlang der Zustellachse (26) verschieblich geführt wird,
und/oder
wobei der erste Abschnitt (24) der Antriebsstange (6) verliersicher in der Vorspannbaugruppe (12) angeordnet ist.

15. Ein Ventil umfassend einen Ventilantrieb (2) gemäß einem der vorstehenden Ansprüche.

## Claims

1. Valve drive (2) for a valve which limits a flow of a process fluid, the valve drive (2) comprising:
a first portion (24) of a drive rod (6) having a first coupling contour (28), which first portion is displaceable along a feed axis (26) and can be arranged in a housing (20),
an electromotive drive unit (30) having an axially movable second portion (34) of the drive rod (6), the second portion (34) of the drive rod (6) comprising a second coupling contour (38),
the first and the second coupling contour (28, 38) engaging in a form-fitting manner along the feed axis (26) in an operating state of the valve drive (2) in which the housing (20) and the drive unit (30) are fixed with respect to each other,
**characterized in that**,
in an assembly state of the valve drive (2) in which the housing (20) and the drive unit (30) are not fixed with respect to each other, the second coupling contour (38) can be removed from the first coupling contour (28) and can be coupled to the first coupling contour (28), and **in that**,
in the assembly state of the valve drive (2), the second coupling contour (38) is displaceable in an imaginary perpendicular plane (42) of the feed axis (26) with respect to the first coupling contour (28), such that the second coupling contour (38) can be separated from the first coupling contour (28) by a lateral movement of the drive unit (30).

2. Valve drive (2) according to claim 1,
wherein the first coupling contour (28) and the second coupling contour (38) are connected to each other along the feed axis (26) with almost no backlash.

3. Valve drive (2) according to any of the preceding claims, wherein the valve drive (2) comprises:
a first housing connection region of the housing (20) in which the first portion (24) of the drive rod (6) is displaceably fixed axially along the feed axis (26),
a second housing connection region of the drive unit (30),
wherein the first housing connection region corresponds to the second housing connection region, such that, in the operating position, the first and second portion (24, 34) of the drive rod (6) lie on the common feed axis.

4. Valve drive (2) according to claim 3, wherein the second connection region provides a thread into which a corresponding mating thread of the first connection region can be screwed.

5. Valve drive (2) according to any of the preceding claims, wherein a non-self-locking gear is arranged between an electric motor of the drive unit (30) and the second coupling contour (38) of the second portion (34).

6. Valve drive (2) according to any of claims 1 to 4, wherein a self-locking gear is arranged between an electric motor of the drive unit (30) and the second coupling contour (38) of the second portion (34).

7. Valve drive (2) according to claim 6,
wherein the second portion (34) of the drive rod (6) can be extended by means of the electric motor,
wherein the second coupling contour (38) of the extended second portion (34) can be coupled to the first coupling contour (28),
wherein the second portion (34) coupled to the first portion (32) can be retracted by means of the electric motor, and
wherein the drive unit (30) comprising the coupled first and second portions (24, 34) can be fixed with respect to the housing.

8. Valve drive (2) according to any of the preceding claims, wherein the first portion (24) of the drive rod (6) is rigidly connected to a guide piston (44), and wherein the guide piston (44) is movably mounted along the feed axis (26) within a guide space which the housing (20) provides,
and/or
wherein a preload assembly (12) for arrangement between the drive unit (30) and a diaphragm (3) is arranged in the housing (20).

9. Valve drive (2) according to claim 8, wherein the guide piston (44) is arranged between the drive unit (30) and the preload assembly (12).

10. Valve drive (2) according to claim 8 or 9, wherein a spring element (22) of the preload assembly (12) holds the preload assembly (12) in a preloaded state before insertion into the housing (20).

11. Valve drive (2) according to claim 10, wherein the spring element (22) is designed, after the preload assembly (12) has been inserted into the housing, to clamp a diaphragm (3) between the preload assembly (12) and a valve body (4).

12. Valve drive (2) according to any of the preceding claims, wherein the housing (20) has a thread which faces away from the drive unit (30) and can be screwed into a mating thread of the associated valve body (4),
and/or
wherein the preload assembly (12) is supported in a diameter recess of the housing (20).

13. Valve drive (2) according to any of claims 8 to 12,
wherein the preload assembly (12) comprises a counter bearing portion and a clamping portion for clamping the diaphragm (3),
wherein the clamping portion is supported on the counter bearing portion by means of the loaded spring element (22),
wherein the clamping portion comprises a first stop region in a portion that projects through a through-opening of the counter-bearing portion, and
wherein, in the preloaded state of the preload assembly (12), a second stop region of the counter bearing portion, in conjunction with the first stop region of the clamping portion, limits a movement of the clamping portion away from the counter bearing portion.

14. Valve drive (2) according to any of claims 8 to 13, wherein the first portion (24) of the drive rod (6) is displaceably guided within the preload assembly (12) along the feed axis (26),
and/or
wherein the first portion (24) of the drive rod (6) is captively arranged in the preload assembly (12).

15. Valve comprising a valve drive (2) according to any of the preceding claims.

## Revendications

1. Commande de vanne (2) pour une vanne qui limite un débit d'un fluide de processus, ladite commande de vanne (2) comprenant:
une première section (24) d'une tige de commande (6) avec un premier contour de couplage (28), qui est déplaçable le long d'un axe d'avance (26) et peut être disposée dans un boîtier (20);
une unité de commande électromotrice (30) comprenant une deuxième section (34) de la tige de commande (6), qui est déplaçable axialement, dans laquelle ladite deuxième section (34) de la tige de commande (6) comprend un deuxième contour de couplage (38);
dans laquelle, lorsque la commande de vanne (2) est dans un état de fonctionnement dans lequel le boîtier (20) et l'unité de commande (30) sont fixes l'un par rapport à l'autre, les premier et deuxième contours de couplage (28, 38) s'engagent l'un dans l'autre à engagement positif le long de l'axe d'avance (26);
**caractérisée par le fait que**,
lorsque la commande de vanne (2) est dans un état de montage dans lequel le boîtier (20) et l'unité de commande (30) ne sont pas fixes l'un par rapport à l'autre, le deuxième contour de couplage (38) peut être espacé du premier contour de couplage (28) et être couplé au premier contour de couplage (28), et que
lorsque la commande de vanne (2) est dans ledit état de montage, le deuxième contour de couplage (38) est déplaçable dans un plan perpendiculaire imaginaire (42) de l'axe d'avance (26) par rapport au premier contour de couplage (28) de sorte que le deuxième contour de couplage (38) peut être séparé du premier contour de couplage (28) par un déplacement latéral de l'unité de commande (30).

2. Commande de vanne (2) selon la revendication 1,
dans lequel le premier contour de couplage (28) et le deuxième contour de couplage (38) sont reliés l'un à l'autre à peu prés sans jeu le long de l'axe d'avance (26).

3. Commande de vanne (2) selon l'une quelconque des revendications précédentes, dans laquelle la commande de vanne (2) comprend:
une première zone de raccordement de boîtier du boîtier (20) dans laquelle la première section (24) de la tige de commande (6) est fixée de manière à être déplaçable axialement le long de l'axe d'avance (26),
une deuxième zone de raccordement de boîtier de l'unité de commande (30),
dans laquelle la première zone de raccordement de boîtier correspond à la deuxième zone de raccordement de boîtier de telle sorte que, en position de fonctionnement, les première et deuxième sections (24, 34) de la tige de commande (6) soient situées sur l'axe d'avance commun.

4. Commande de vanne (2) selon la revendication 3, dans laquelle la deuxième zone de raccordement fournit un filetage dans lequel peut être vissé un contre-filetage correspondant de la première zone de raccordement.

5. Commande de vanne (2) selon l'une quelconque des revendications précédentes, dans laquelle un engrenage non autobloquant est disposé entre un moteur électrique de ladite unité de commande (30) et le deuxième contour de couplage (38) de la deuxième section (34).

6. Commande de vanne (2) selon l'une quelconque des revendications 1 à 4, dans laquelle un engrenage autobloquant est disposé entre un moteur électrique de ladite unité de commande (30) et le deuxième contour de couplage (38) de la deuxième section (34).

7. Commande de vanne (2) selon la revendication 6,
dans laquelle la deuxième section (34) de la tige de commande (6) est extensible au moyen du moteur électrique,
dans laquelle le deuxième contour de couplage (38) de la deuxième section (34) déployée peut être couplé au premier contour de couplage (28),
dans laquelle la deuxième section (34) couplée à la première section (32) est rétractable au moyen du moteur électrique, et
dans laquelle l'unité de commande (30), avec les première et deuxième sections couplées (24, 34), peut être fixée par rapport au boîtier.

8. Commande de vanne (2) selon l'une quelconque des revendications précédentes, dans laquelle la première section (24) de la tige de commande (6) est reliée solidement à un piston de guidage (44), et dans laquelle ledit piston de guidage (44) est monté de manière mobile le long de l'axe d'avance (26) à l'intérieur d'un espace de guidage qui est libéré par le boîtier (20),
et/ou
dans laquelle un ensemble de précontrainte (12) destiné à être disposé entre l'unité de commande (30) et une membrane (3) est disposé dans le boîtier (20).

9. Commande de vanne (2) selon la revendication 8, dans laquelle le piston de guidage (44) est disposé entre l'unité de commande (30) et l'ensemble de précontrainte (12).

10. Commande de vanne (2) selon la revendication 8 ou 9, dans laquelle un élément formant ressort (22) de l'ensemble de précontrainte (12) maintient ledit ensemble de précontrainte (12) en état de précontrainte avant son insertion dans le boîtier (20).

11. Commande de vanne (2) selon la revendication 10, dans laquelle l'élément formant ressort (22), après l'insertion de l'ensemble de précontrainte (12) dans le boîtier, est configuré pour serrer une membrane (3) entre l'ensemble de précontrainte (12) et un corps de vanne (4).

12. Commande de vanne (2) selon l'une quelconque des revendications précédentes, dans laquelle le boîtier (20) comprend un filetage disposé dans la direction opposée à l'unité de commande (30), qui peut être vissé dans un contre-filetage du corps de vanne (4) associé,
et/ou
dans laquelle ledit ensemble de précontrainte (12) prend appui sur un retrait de diamètre du boîtier (20).

13. Commande de vanne (2) selon l'une quelconque des revendications 8 à 12,
dans laquelle l'ensemble de précontrainte (12) comprend une contre-section de support et une section de serrage pour serrer la membrane (3),
dans laquelle la section de serrage prend appui sur la contre-section de support au moyen de l'élément formant ressort (22) sous pression,
dans laquelle la section de serrage comprend une première zone de butée dans une section faisant saillie à travers une ouverture traversante de la contre-section de support, et
dans laquelle, en état précontrainte de l'ensemble de précontrainte (12), une deuxième zone de butée de la contre-section de support, en coopération avec la première zone de butée de la section de serrage, limite un déplacement de la section de serrage dans la direction opposée à la contre-section de support.

14. Commande de vanne (2) selon l'une quelconque des revendications 8 à 13, dans laquelle la première section (24) de la tige de commande (6) est guidée à l'intérieur de l'ensemble de précontrainte (12) de manière déplaçable le long de l'axe d'avance (26),
et/ou
dans laquelle la première section (24) de la tige de commande (6) est disposée de manière imperdable dans l'ensemble de précontrainte (12).

15. Vanne comprenant une commande de vanne (2) selon l'une quelconque des revendications précédentes.
